# FASCICULE DE BREVET EUROPEEN

(11) **EP 3 375 675 B1**
(45) Date de publication et mention de la délivrance du brevet: **05.02.2020**
(21) Numéro de dépôt: 18161105.4
(22) Date de dépôt: 09.03.2018
(51) Int. Cl.: B60S 1/40

(54) **CAPOT, DISPOSITIF DE CONNEXION POUR LE MONTAGE D'UN BALAI D'ESSUIE-GLACE SUR UN BRAS D'ESSUIE-GLACE ET SYSTÈME D'ESSUYAGE CORRESPONDANTS**
ABDECKUNG, VERBINDUNGSVORRICHTUNG FÜR DIE MONTAGE EINES SCHEIBENWISCHERBLATTS AUF EINEM ENTSPRECHENDEN SCHEIBENWISCHERARM, UND ENTSPRECHENDES SCHEIBENWISCHSYSTEM
CAP, CONNECTING DEVICE FOR MOUNTING A WINDSCREEN WIPER ON A CORRESPONDING WINDSCREEN WIPER ARM AND WINDSCREEN WIPING SYSTEM

(30) Priorité: 14.03.2017 FR 1752075
(43) Date de publication de la demande: 19.09.2018
(73) Titulaire: Valeo Systèmes d'Essuyage, 78322 Le Mesnil Saint Denis (FR)
(72) Inventeur: GRASSO, Giuseppe, 63500 ISSOIRE (FR); BARRET, Guillaume, 63500 ISSOIRE (FR)
(74) Mandataire: Valeo Systèmes d'Essuyage

(56) Documents cités:
- EP-A1- 3 045 357
- DE-A1- 10 259 480

## Description

La présente invention se rapporte à la fixation d'un balai d'essuie-glace sur un bras d'essuie-glace, en particulier de véhicule automobile. Elle concerne plus particulièrement un capot recouvrant la liaison entre le bras et le balai d'essuie-glace. La présente invention concerne également un dispositif de connexion pour assembler le balai d'essuie-glace au bras d'essuie-glace de véhicule automobile comprenant un tel capot. L'invention concerne encore un système d'essuyage correspondant.

Classiquement, un véhicule automobile est équipé d'essuie-glaces pour assurer un nettoyage d'une surface vitrée telle que le pare-brise. Ces essuie-glaces comprennent en général des bras d'essuie-glace, effectuant un mouvement de va-et-vient angulaire, et des balais, porteurs eux-mêmes de lames racleuses. Ces lames frottent contre la surface vitrée pour évacuer du liquide de nettoyage en l'amenant en dehors du champ de vision du conducteur.

Selon les solutions connues, le balai est rattaché au bras d'essuie-glace par un dispositif de connexion.

L'invention concerne plus particulièrement un dispositif de connexion pour un bras d'essuie-glace de type dit à pivot latéral ou à axe de pivotement latéral, également connu sous l'appellation « side lock » en anglais. Un tel bras d'essuie-glace comporte un segment terminal, configuré pour coopérer avec le connecteur. Ce segment terminal comporte un premier élément allongé ou extrémité longitudinale s'étendant sensiblement dans le prolongement du bras d'essuie-glace. En outre, une tige sensiblement cylindrique s'étend perpendiculairement à partir de l'extrémité longitudinale du bras d'essuie-glace et forme un axe transversal.

Le dispositif de connexion comporte un connecteur et un capot. Le connecteur est une pièce destinée à être solidarisée au balai d'essuie-glace. Le connecteur est également destiné à être traversé par l'axe transversal porté par le bras d'essuie-glace, afin de lier le connecteur au segment terminal du bras d'essuie-glace par une liaison pivot autour de l'axe transversal. À l'état assemblé, le balai d'essuie-glace peut pivoter autour de l'axe transversal, pour s'adapter à la surface vitrée lors du mouvement de va et vient de l'essuie-glace.

Le capot est lui destiné à être assemblé et verrouillé sur le connecteur.

En conséquence, le dispositif de connexion comporte des moyens permettant le raccordement et le verrouillage du capot sur le connecteur monté sur le balai d'essuie-glace.

Cependant, selon les solutions connues, l'assemblage et le verrouillage de l'ensemble nécessite des manipulations compliquées. Par exemple, le capot peut être monté sur le connecteur et des mouvements de rotation entre le capot et le connecteur sont nécessaires avant de pouvoir verrouiller l'ensemble. DE 102.59.480 divulgue un capot selon le préambule de la revendication 1.

Un des buts de la présente invention est de pallier au moins partiellement ces problèmes de l'état de la technique en proposant une alternative à moindre cout facilitant le montage et le démontage du capot sur le connecteur destiné à être raccordé au balai d'essuie-glace d'une part et au bras d'essuie-glace d'autre part par l'intermédiaire de l'axe transversal.

À cet effet, l'invention a pour objet un capot configuré pour être assemblé à un segment terminal d'un bras d'essuie-glace configuré pour être relié à un balai d'essuie-glace, ledit segment terminal présentant une extrémité longitudinale portant un axe transversal configuré pour définir un axe de pivotement du balai d'essuie-glace, le capot comportant :
- une partie supérieure configurée pour recouvrir le segment terminal du bras d'essuie-glace à l'état assemblé du capot audit segment terminal,
- une partie inférieure opposée à la partie supérieure, et
- au moins un moyen de fixation configuré pour coopérer avec l'axe transversal, de manière à fixer l'axe transversal au capot.

Selon l'invention, la partie inférieure du capot comporte au moins un moyen de maintien réalisé d'une seule pièce avec le capot et configuré pour coopérer avec le segment terminal du bras d'essuie-glace pour l'assemblage du capot au segment terminal du bras d'essuie-glace.

Un tel capot est simple de réalisation. Notamment, il suffit d'un mouvement dans l'outillage pour réaliser les moyens de maintien venus de matière avec le capot.

Selon une ou plusieurs caractéristiques du capot, prises seules ou en combinaison :
- ledit au moins un moyen de maintien comporte au moins un relief formé sur la partie inférieure du capot ;
- ledit au moins un relief est venu de matière avec le capot ;
- le capot comporte deux parois latérales opposées s'étendant à partir de la partie supérieure du capot ;
- ledit au moins un relief est formé sur une portion inférieure d'au moins une paroi latérale ;
- au moins la paroi latérale du capot portant ledit au moins un relief est au moins partiellement flexible et est configurée pour se déformer de façon à permettre le verrouillage ou le déverrouillage du capot et du segment terminal du bras d'essuie-glace ;
- ledit au moins un moyen de maintien comporte au moins un élément d'encliquetage. Ceci permet une connexion simple du capot sur le connecteur destiné à porter l'axe transversal, sans nécessiter de manipulations compliquées. Il suffit de monter le capot sur le connecteur ou de glisser le capot autour du connecteur, et le capot est destiné à être clippé ou fixé par encliquetage, de façon simple, sur le bras d'essuie-glace dont l'axe transversal est monté dans le connecteur ;
- ledit au moins un moyen de maintien comporte au moins un relief d'encliquetage configuré pour bloquer le retrait du segment terminal du bras d'essuie-glace à l'état assemblé dudit segment terminal au capot ;
- ledit au moins un moyen de maintien comporte au moins un relief de guidage configuré pour guider le segment terminal du bras d'essuie-glace lors de l'assemblage du segment terminal du bras d'essuie-glace au capot ;
- ledit au moins un relief d'encliquetage est configuré pour guider le bras d'essuie-glace ;
- le capot présente une forme longitudinale ;
- ledit au moins un relief s'étend selon la direction longitudinale du capot ;
- le capot comprend un même relief s'étendant sur plus de la moitié de la longueur du capot ;
- le capot comprend une cloison formant butée pour le segment terminal du bras d'essuie-glace ;
- le capot comprend au moins deux reliefs distincts ;
- ledit au moins un relief comporte une face oblique par rapport à la partie inférieure du capot ;
- la face oblique est configurée pour être en contact avec le segment terminal du bras d'essuie-glace lors de l'assemblage dudit segment terminal avec le capot ;
- ledit au moins un relief comporte une face d'arrêt formant un rebord contre lequel le segment terminal du bras d'essuie-glace est configuré pour venir en appui à l'état assemblé du segment terminal au capot;
- ledit au moins un moyen de fixation comporte au moins un orifice formé sur le capot ;
- l'orifice est configuré pour bloquer l'axe transversal porté par le bras d'essuie-glace à l'état assemblé du capot audit segment terminal ;
- l'orifice est borgne ;
- l'orifice est débouchant ;
- l'orifice est agencé du côté opposé audit au moins un moyen de maintien ;
- ledit au moins un moyen de fixation comporte au moins deux protubérances formées sur la partie supérieure du capot ;
- l'axe transversal est configuré pour s'engager entre les deux protubérances lors de l'assemblage avec le capot, pour le centrage du segment terminal du bras d'essuie-glace ;
- les protubérances présentent respectivement une forme en « 8 » ou similaire ;
- ledit au moins un moyen de fixation comprend au moins une paroi de fixation (28a), voire au moins deux parois de fixation, s'étendant depuis la partie supérieure du capot vers l'intérieur du capot, et présentant respectivement une encoche dans laquelle l'axe transversal porté par le bras d'essuie-glace est configuré pour s'engager ;
- l'encoche est de forme en « U » ou de forme similaire ;
- le capot est configuré pour être assemblé au segment terminal du bras d'essuie-glace par translation selon la direction longitudinale du capot ;
- le capot est configuré pour être assemblé au segment terminal du bras d'essuie-glace par translation selon une direction perpendiculaire à la direction longitudinale du capot.

L'invention a aussi pour objet un dispositif de connexion pour le montage d'un balai d'essuie-glace sur un bras d'essuie-glace comportant :
- un connecteur configuré pour être relié au balai d'essuie-glace d'une part et au bras d'essuie-glace d'autre part, et
- un capot, tel que défini précédemment, configuré pour coopérer avec le connecteur de manière à fixer le balai d'essuie-glace au bras d'essuie-glace.

L'invention a encore pour objet un système d'essuyage de véhicule automobile comportant un dispositif de connexion tel que défini ci-dessus.

Selon un aspect de l'invention, le système d'essuyage de véhicule automobile comporte au moins un balai d'essuie-glace.

D'autres caractéristiques et avantages de l'invention apparaitront plus clairement à la lecture de la description suivante, donnée à titre d'exemple illustratif et non limitatif, et des figures annexées parmi lesquelles :
- la figure 1 est une vue en perspective montrant un système d'essuyage,
- la figure 2a est une vue de dessus éclatée d'un premier mode de réalisation d'un dispositif de connexion sur un segment terminal d'un bras d'essuie-glace du système d'essuyage de la figure 1,
- la figure 2b est une vue de dessous éclatée du dispositif de connexion et du segment terminal du bras d'essuie-glace de la figure 2a,
- la figure 2c est une vue en perspective du dispositif de connexion des figures 2a et 2b assemblé sur le segment terminal du bras d'essuie-glace,
- la figure 2d montre un exemple d'axe transversal porté par le segment terminal d'un bras d'essuie-glace,
- la figure 2e est une vue de dessous montrant un capot du dispositif de connexion assemblé au segment terminal du bras d'essuie-glace des figures 2a à 2c,
- la figure 2f est une vue de côté de la figure 2e,
- la figure 2g est une première vue en perspective montrant l'intérieur du capot selon le premier mode de réalisation,
- la figure 2h est une deuxième vue en perspective montrant l'intérieur du capot selon le premier mode de réalisation,
- la figure 3a montre un deuxième mode de réalisation d'un dispositif de connexion sur un segment terminal d'un bras d'essuie-glace du système d'essuyage de la figure 1,
- la figure 3b est une première vue éclatée du dispositif de connexion et du segment terminal du bras d'essuie-glace de la figure 3a,
- la figure 3c est une deuxième vue éclatée du dispositif de connexion et du segment terminal du bras d'essuie-glace de la figure 3a,
- la figure 3d est une vue éclatée montrant le segment terminal du bras d'essuie-glace et un connecteur du dispositif de connexion selon le deuxième mode de réalisation avant assemblage au capot,
- la figure 3e montre un axe transversal porté par le segment terminal du bras d'essuie-glace des figures 3a à 3d,
- la figure 3f est une vue de dessous en perspective du capot selon le deuxième mode de réalisation,
- la figure 4a montre un troisième mode de réalisation d'un dispositif de connexion sur un segment terminal d'un bras d'essuie-glace du système d'essuyage de la figure 1,
- la figure 4b est une vue en coupe de la figure 4a,
- la figure 4c est une vue éclatée du dispositif de connexion et du segment terminal du bras d'essuie-glace selon le troisième mode de réalisation,
- la figure 4d est une première vue en perspective montrant le dispositif de connexion selon le troisième mode de réalisation assemblé à l'axe transversal,
- la figure 4e est une deuxième vue en perspective montrant le dispositif de connexion selon le troisième mode de réalisation assemblé à l'axe transversal,
- la figure 4f est une vue en perspective du capot du dispositif de connexion selon le troisième mode de réalisation,
- la figure 4g est une vue en coupe du capot selon le troisième mode de réalisation, et
- la figure 4h est une vue de dessous du capot selon le troisième mode de réalisation.

Sur ces figures, les éléments identiques ou similaires sont identifiés par les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

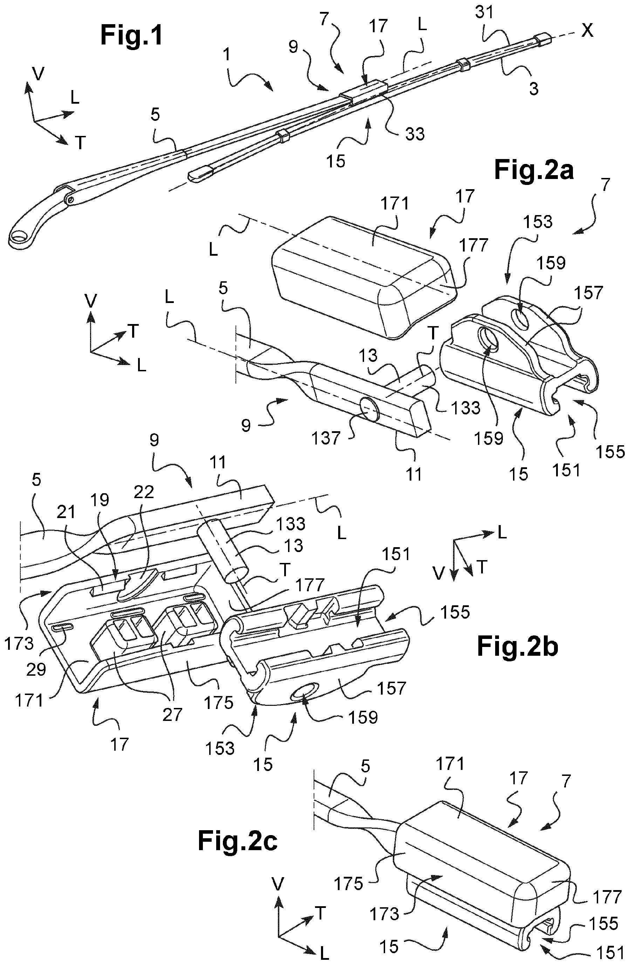

On a représenté sur la figure 1 un système d'essuyage 1. Le système d'essuyage peut en outre comporter un mécanisme motorisé d'un véhicule automobile. Le système d'essuyage 1 comprend :
- au moins un balai d'essuie-glace 3 destiné à être fixé sur un bras d'essuie-glace 5, et
- un dispositif de connexion 7 destiné à permettre l'assemblage du balai d'essuie-glace 3 au bras d'essuie-glace 5.

Le système d'essuyage 1 peut comprendre ou non le bras d'essuie-glace 5.

Le balai d'essuie-glace 3 s'étend longitudinalement selon une direction X.

Le balai d'essuie-glace 3 comporte notamment un déflecteur 31 (ou «spoiler» en anglais) et une lame d'essuyage 33. Le déflecteur 31 et la lame d'essuyage 33 sont en matériau souple.

Le bras d'essuie-glace 5 s'étend longitudinalement selon une direction L.

Dans la suite de la description, on adoptera à titre non limitatif des directions longitudinale, verticale et transversale indiquées sur la figure 1 par le trièdre (L, V, T). Dans la suite de la description, les termes supérieur/inférieur, au-dessus/en-dessous, haut/bas sont désignés en référence à la disposition des éléments sur les figures selon la direction verticale V.

Le bras d'essuie-glace 5 comporte un segment terminal 9, mieux visible sur les figures 2a, 2b, configuré pour être relié au balai d'essuie-glace 3. Plus précisément, le segment terminal 9 du bras d'essuie-glace 5 peut être relié au balai d'essuie-glace 3 par l'intermédiaire du dispositif de connexion 7.

Le segment terminal 9 présente une extrémité longitudinale 11. L'extrémité longitudinale 11 porte un axe transversal 13 configuré pour définir un axe de pivotement du balai d'essuie-glace 3 (non visible sur les figures 2a, 2b). Dans ce cas, le bras d'essuie-glace 5 est dit à pivot latéral ou « side lock » en anglais. L'axe transversal 13 est de forme générale sensiblement cylindrique. Autrement dit, l'axe transversal 13 est de forme générale cylindrique ou similaire. Cet axe transversal 13 s'étend selon la direction transversale T, perpendiculaire à la direction longitudinale L.

Le dispositif de connexion 7 (voir figures 2a à 2c) permet le montage et l'articulation du balai d'essuie-glace 3, en se référant également à la figure 1, sur le bras d'essuie-glace 5, plus précisément sur l'extrémité longitudinale 11. Le dispositif de connexion 7 comporte à cet effet un connecteur 15 et un capot 17.

Le connecteur 15 (figures 2a à 2c) est configuré pour être relié au balai d'essuie-glace 3 d'une part et au bras d'essuie-glace 5 d'autre part (figure 1). Le connecteur 15 sert d'interface avec le balai d'essuie-glace 3 et le bras d'essuie-glace 5.

Le capot 17 est configuré pour coopérer avec le connecteur 15 de manière à fixer le balai d'essuie-glace 3 au bras d'essuie-glace 5. Le capot 17 permet notamment le verrouillage de l'ensemble.

À l'état assemblé du dispositif de fixation 7 sur le segment terminal 9 du bras d'essuie-glace 5, l'axe transversal 13 (visible sur les figures 2a, 2b) est monté dans le connecteur 15 et maintenu par le capot 17. Le connecteur 15 et le capot 17 coopèrent donc pour maintenir et fixer le balai d'essuie-glace 3 sur le bras d'essuie-glace 5.

Un dispositif de connexion 7 peut comprendre différents types de connecteurs 15 et de capots 17. Les différences entre plusieurs modes de réalisation du connecteur 15 et du capot 17 sont explicitées par la suite.

### Premier mode de réalisation

En référence aux figures 2a à 2h, le dispositif de connexion 7 selon le premier mode de réalisation, est configuré pour coopérer avec un axe transversal 13 du bras d'essuyage.

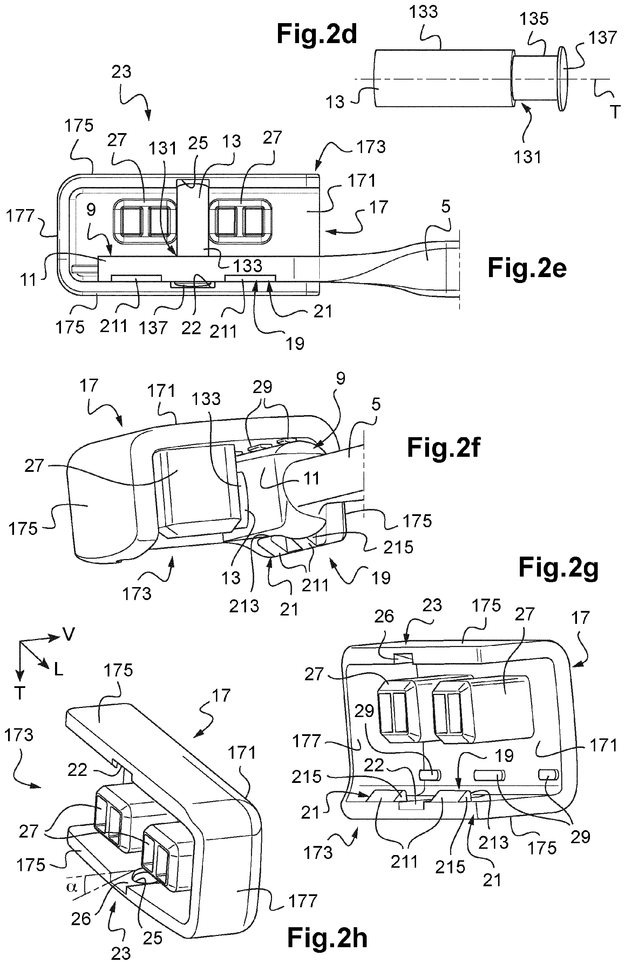

L'axe transversal comporte par exemple un épaulement 131 visible sur la figure 2d. De ce fait, l'axe transversal 13 présente un premier tronçon 133 de premier diamètre et un deuxième tronçon 135 de deuxième diamètre, par exemple inférieur au premier diamètre. Le premier tronçon 133 est configuré pour être assemblé au connecteur 15 (non visible sur la figure 2d), et le deuxième tronçon 135 est configuré pour être assemblé à l'extrémité longitudinale 11 du bras d'essuie-glace 5 (non visible sur la figure 2d).

L'épaulement 131 sert ainsi de surface d'appui à l'extrémité longitudinale 11 du bras d'essuie-glace 5 à l'état assemblé de l'axe transversal 13 et de l'extrémité longitudinale 11 (voir figure 2e).

En se référant de nouveau à la figure 2d, l'axe transversal 13 peut comporter en outre une extrémité 137 de diamètre supérieur au deuxième tronçon 135. L'extrémité 137 peut être formée après assemblage de l'axe transversal 13, plus précisément du deuxième tronçon 135, au bras d'essuie-glace 5 (voir également les figures 2a, 2b, 2e), par exemple par bouterollage, de façon à solidariser l'extrémité longitudinale 11 et l'axe transversal 13. Le deuxième tronçon 135 est interposé entre le premier tronçon 133 et l'extrémité 137 (voir figure 2d).

Bien entendu, la forme de l'axe transversal 13, en particulier du deuxième tronçon 135, est complémentaire à la forme d'un orifice (non visible) pratiqué sur l'extrémité longitudinale 11 du segment terminal 9 du bras d'essuie-glace 5 (voir figures 2a et 2b).

### Connecteur

En référence aux figures 2a à 2c, on décrit plus en détail le connecteur 15 configuré pour être relié au capot 17 mais aussi au bras d'essuie-glace 5, et au balai d'essuie-glace 3, non visible sur les figures 2a à 2c.

Le connecteur 15 est par exemple directement relié au bras d'essuie-glace 5. De même, le connecteur 15 peut être directement fixé au balai d'essuie-glace 3.

Le connecteur 15 présente par exemple une forme d'extension principale longitudinale.

Selon le premier mode de réalisation illustré sur les figures 2a à 2c, le connecteur 15 peut être symétrique par rapport à un plan, dit plan médian, selon les directions transversale T et verticale V et passant par le centre du connecteur 15. Le connecteur 15 symétrique peut être assemblé dans n'importe quel sens sur le balai d'essuie-glace 3.

Le connecteur 15 présente une première partie 151 ou partie de liaison au balai d'essuie-glace 3, configurée pour être reliée au balai d'essuie-glace 3 (non visible sur les figures 2a à 2c) et une deuxième partie 153 opposée ou partie de liaison au bras d'essuie-glace 5 configurée pour coopérer avec l'axe transversal 13 du segment terminal 9 du bras d'essuie-glace 5.

La première partie 151 du connecteur 15 présente par exemple une forme d'étrier allongé suivant la direction longitudinale L et destiné à enserrer le balai d'essuie-glace 3, non représenté sur les figures 2a à 2c. Pour ce faire, la première partie 151 du connecteur 15 présente un canal 155 de maintien du balai d'essuie-glace 3 (non visible sur les figures 2a à 2c). La forme du canal 155 de maintien est par exemple adaptée à la forme du déflecteur 31 du balai d'essuie-glace 3 (voir figure 1).

La deuxième partie 153 du connecteur 15 comporte, dans cet exemple illustré sur les figures 2a, 2b, deux parois latérales 157 ou brides latérales. Les parois latérales 157 sont agencées opposées et s'étendent ici selon un plan parallèle au plan L, V.

Les parois latérales 157 présentent des moyens d'assemblage à l'axe transversal 13. Selon l'exemple illustré, un orifice 159 pour le passage de l'axe transversal 13 est ménagé dans chaque paroi latérale 157. Les orifices 159 forment les moyens d'assemblage à l'axe transversal 13.

Plus précisément, les orifices 159 sont de forme complémentaire à la forme de l'axe transversal 13, en particulier du premier tronçon 133. Les orifices 159 sont de section circulaire selon l'exemple illustré.

Les brides ou parois latérales 157 sont reçues dans l'espace interne délimité par le capot 17 à l'état assemblé du dispositif de connexion 7 (voir figures 2a à 2c).

### Capot

En référence aux figures 2a à 2c et 2e à 2h, on décrit plus en détail le capot 17.

Le capot 17 est destiné à se fixer sur le connecteur 15 du côté opposé à la lame d'essuyage 33 du balai d'essuie-glace 3, en se référant également à la figure 1.

Le capot 17 peut être monté sur le segment terminal 9 du bras d'essuie-glace 5 dont l'axe transversal 13 est monté dans le connecteur 15.

Le capot 17 présente une forme longitudinale. La direction longitudinale L du trièdre correspond à la direction principale du capot 17.

Selon le premier mode de réalisation illustré sur les figures 2a à 2c et 2e, 2f, le capot 17 est configuré pour être assemblé au segment terminal 9 du bras d'essuie-glace 5 par translation selon une direction perpendiculaire à la direction longitudinale du capot 17 et également perpendiculaire à l'axe transversal 13. Autrement dit, le capot 17 est configuré pour être assemblé au segment terminal 9 du bras d'essuie-glace 5 par translation selon la direction verticale V.

Par ailleurs, le capot 17 présente par exemple une forme ouverte, c'est-à-dire qui n'est pas fermée de tous les côtés.

Selon le premier mode de réalisation illustré sur les figures 2a à 2c et 2d à 2h, le capot 17 comporte une partie supérieure 171 et une partie inférieure 173 opposée.

La partie supérieure 171 est configurée pour recouvrir le segment terminal 9 du bras d'essuie-glace 5 portant l'axe transversal 13 à l'état assemblé du capot 17 au bras d'essuie-glace 5 (voir figures 2c et 2e).

La partie supérieure est par exemple formée par une paroi supérieure 171 du capot 17, qui peut être de forme sensiblement rectangulaire, c'est-à-dire de forme rectangulaire ou équivalente ou similaire.

Par ailleurs, selon ce premier mode de réalisation illustré, le capot 17 comporte également deux parois latérales 175 opposées reliées par la paroi supérieure 171. Autrement dit, les parois latérales 175 s'étendent depuis la paroi supérieure 171. À l'état assemblé du capot 17 au bras d'essuie-glace 5, les parois latérales 175 s'étendent en direction du segment terminal 9 du bras d'essuie-glace 5.

Le capot 17 comporte encore selon le premier mode de réalisation illustré, une paroi d'extrémité 177 reliée à la paroi supérieure 171 et aux parois latérales 175. La paroi d'extrémité 177 s'étend ici selon un plan parallèle au plan V, T et les parois latérales 175 s'étendent ici selon un plan parallèle au plan L, V.

On entend par « partie inférieure » 173, aussi bien une paroi inférieure agencée en regard de la partie supérieure ici de la paroi supérieure 171, qu'un ou plusieurs bords inférieurs du capot 17, notamment des parois latérales 175 et/ou d'extrémité 177 du capot 17. En variante ou en complément, la partie inférieure 173 peut comporter une portion des parois latérales 175 et/ou d'extrémité 177 du capot 17 qui se trouve du côté opposé à la paroi supérieure 171.

Dans l'exemple illustré, aucune paroi n'est agencée en regard de la paroi supérieure 171. La partie inférieure 173 est formée par les bords inférieurs ainsi que les portions inférieures des parois latérales 175 et éventuellement de la paroi d'extrémité 177.

De plus, la partie inférieure 173 du capot 17 comporte au moins un moyen de maintien 19 réalisé d'une seule pièce avec le capot 17.

Un exemple de moyens de maintien 19 selon le premier mode de réalisation est représenté sur les figures 2b, 2e, 2f, 2g.

En référence aux figures 2e et 2f, le ou les moyens de maintien 19 sont configurés pour coopérer avec le segment terminal 9 du bras d'essuie-glace 5 pour l'assemblage du capot 17 au segment terminal 9 du bras d'essuie-glace 5.

On entend par « moyen » de maintien, tout élément, ou dispositif ou organe participant au maintien du segment terminal 9 du bras d'essuie-glace 5 dans le capot 17, à l'état assemblé. On peut citer à titre d'exemple non limitatif, et de façon non exhaustive, un ou plusieurs reliefs, crochets, une ou plusieurs protubérances, languettes, pattes, nervures ou encore toute autre déformation du capot 17.

Selon le premier mode de réalisation illustré, deux moyens de maintien 19 sont prévus sur la partie inférieure 173 du capot 17. Ces moyens de maintien 19 peuvent comporter au moins un élément ou organe d'encliquetage.

Chaque moyen de maintien 19 peut comporter au moins un relief 21. Le ou chaque relief 21 est formé sur la partie inférieure 173 du capot 17, à savoir dans cet exemple formé sur la portion inférieure d'une paroi latérale 175 du capot 17. Le ou chaque relief 21 est venu de matière avec le capot 17.

En particulier, le capot 17 peut comporter au moins deux reliefs 21 distincts. Les deux reliefs 21 sont avantageusement agencés sur la même paroi latérale 175. Bien entendu, un seul relief 21 ou au contraire plus de deux reliefs 21 peuvent être envisagés.

Chaque relief 21 fait saille sur la paroi latérale 175, plus précisément sur la portion inférieure ou le bas de la paroi latérale 175, en s'étendant depuis la paroi latérale 175 vers l'intérieur du capot 17.

Le ou chaque relief 21 s'étend longitudinalement selon la direction longitudinale L du capot 17.

Il s'agit en particulier dans cet exemple de reliefs d'encliquetage 21 configurés pour bloquer le retrait du segment terminal 9 du bras d'essuie-glace 5 après assemblage au capot 17. Ces reliefs d'encliquetage 21 sont avantageusement également conformés de manière à faciliter l'assemblage du segment terminal 9 du bras d'essuie-glace 5 avec le capot 17.

Pour ce faire, chaque relief 21 comporte une face oblique 211 et une face d'arrêt 213.

La face oblique 211 est oblique ou inclinée par rapport à la partie inférieure 173 du capot 17. Dans cet exemple, la face oblique 211 est inclinée par rapport au plan formé par la paroi latérale 175 portant le relief 21. Il s'agit ici d'un plan parallèle au plan L, T.

La face oblique 211 est configurée pour être en contact avec le segment terminal 9 du bras d'essuie-glace 5 lors de l'assemblage du segment terminal 9 avec le capot 17. Plus précisément, la face oblique 211 est la première face de chaque relief 21 à être en contact avec l'extrémité longitudinale 11 du segment terminal 9 du bras d'essuie-glace 5. Cette face oblique 211 fait office de bord d'attaque.

Cette face oblique 211 est configurée de manière à faciliter l'introduction du bras d'essuie-glace 5, c'est-à-dire le mouvement de coulissement ou translation verticale. Pour ce faire, on prévoit par exemple que la face oblique 211 forme une pente ascendante dans le sens d'introduction du segment terminal 9 du bras d'essuie-glace 5 dans le capot 17.

La face d'arrêt 213, mieux visible sur la figure 2f, forme un rebord contre lequel le segment terminal 9 du bras d'essuie-glace 5 est configuré pour venir en appui après assemblage. La face d'arrêt 213 peut être sensiblement plane. Autrement dit, la face d'arrêt 213 est plane ou de forme équivalente.

Selon l'exemple de réalisation particulier illustré sur les figures 2f et 2g, chaque relief 21 est réalisé sous la forme d'un polyèdre comprenant la face oblique 211, la face d'arrêt 213, et comprenant en outre une base, et deux faces latérales 215 opposées.

La base du relief 21 coïncide avec la face interne de la paroi latérale 175 du capot 17 portant le relief 21. On entend par « face interne » d'une paroi latérale 175 du capot 17, la face agencée du côté du connecteur 15 et étant en regard d'une face latérale 157 du connecteur 15 à l'état assemblé du dispositif de connexion 7.

Cette base du relief 21 délimite dans l'exemple illustré une forme sensiblement rectangulaire s'étendant longitudinalement selon la direction L. Autrement dit, la base du relief 21 peut être de forme rectangulaire ou similaire.

Les faces latérales 215 du relief 21 sont respectivement de forme sensiblement triangulaire. Autrement dit, les faces latérales 215 sont de forme triangulaire ou similaire. Ces faces latérales 215 joignent la base, la face d'arrêt 213 et la face oblique 211.

Ainsi, lors de l'assemblage du capot 17 au bras d'essuie-glace 5 et au connecteur 15 recevant l'axe transversal 13 du bras d'essuie-glace 5, l'extrémité longitudinale 11 coulisse sur la face oblique 211 jusqu'à venir en appui contre le rebord formé par la face d'arrêt 213, à la fin de la course d'introduction du segment terminal 11 du bras d'essuie-glace 5 dans le capot 17. Une fois la face inférieure de l'extrémité longitudinale 11 en appui sur la face d'arrêt 213, ceci contribue à bloquer le bras d'essuie-glace 5 en translation selon l'axe vertical V.

Selon une variante de réalisation, le ou les reliefs d'encliquetage 21 peuvent avoir une fonction de guidage du segment terminal 9 du bras d'essuie-glace 5, lors de l'assemblage du segment terminal 9 dans le capot 17.

Par ailleurs, on peut prévoir que le capot 17 comporte de plus un guide de l'extrémité 137 de l'axe transversal 13 lors de l'introduction du segment terminal 9 du bras d'essuie-glace 5 dans le capot 17. Ce guide est par exemple réalisé sous la forme d'un évidement 22 sur la paroi latérale 175 présentant les reliefs 21. Cet évidement 22 est visible sur les figures 2b, 2e et 2g. L'évidement 22 est situé entre les deux reliefs 21.

L'évidement 22 est de forme adaptée pour le guidage de l'extrémité 137 selon un mouvement de coulissement vertical, et est donc complémentaire à la forme de l'extrémité 137. L'évidement 22 présente par exemple une forme sensiblement en « U », comme cela est visible sur la figure 2b. Autrement dit, l'évidement 22 présente une forme en « U » ou une forme équivalente se rapprochant de la forme en « U ».

La base du « U » se trouve dans cet exemple à proximité de la paroi supérieure 171 du capot 17 et les extrémités des branches du « U » de part et d'autre de la base, se trouvent à proximité des reliefs 21.

En outre, comme dit précédemment, le capot 17 permet notamment le verrouillage de l'ensemble. À cet effet, le capot 17 comporte au moins un moyen de fixation 23 (voir figures 2e, 2g, 2h) configuré pour coopérer avec l'axe transversal 13, de manière à fixer et maintenir en position, l'axe transversal 13 au capot 17 à l'état assemblé du capot 17 au segment terminal 9.

Le moyen de fixation 23 peut permettre la fixation / le maintien de l'axe transversal par coopération de forme avec l'axe transversal 13.

Selon le premier mode de réalisation illustré sur les figures 2e et 2h, le moyen de fixation 23 comporte au moins un orifice 25 formé sur le capot 17 et configuré pour bloquer l'axe transversal 13 porté par le bras d'essuie-glace 5 à l'état assemblé du capot 17 au segment terminal 9. Selon le premier mode de réalisation, il s'agit d'un orifice 25 borgne.

L'orifice 25 est prévu sur la paroi latérale 175 du capot 17 opposée à la paroi latérale 175 portant le ou les moyens de maintien 19. Cet orifice 25 est donc agencé du côté opposé aux deux reliefs 21 précédemment décrits.

De façon complémentaire, le moyen de fixation 23 peut comporter de plus une pente 26.

La pente 26 est formée sur la face interne de la paroi latérale 175 du capot 17 présentant l'orifice 25.

Cette pente 26 est agencée de manière à débuter du bord inférieur de la paroi latérale 175 du capot 17 présentant l'orifice 25, pour se terminer en formant une portion du contour de l'orifice 25.

La pente 26 est inclinée par rapport au plan général défini par la paroi latérale 175 du capot 17 présentant l'orifice 25. À titre d'exemple non limitatif, la pente 26 est inclinée par rapport au plan défini par cette paroi latérale 175 d'un angle α de l'ordre de 10° à 30°. En particulier, l'angle α peut être de façon non limitative de l'ordre de 15°.

De plus, afin de faciliter l'insertion de l'axe transversal 13 dans l'orifice 25 lors de l'assemblage du segment terminal 9 du bras d'essuie-glace 5 au capot 17, la pente 26 est ascendante depuis le bord inférieur de la paroi latérale 175 jusqu'à l'orifice 25.

À l'état assemblé, c'est donc l'extrémité libre du premier tronçon 133 de l'axe transversal 13 qui est bloquée dans l'orifice 25. Une fois l'extrémité libre du premier tronçon 133 de l'axe transversal 13 engagée dans l'orifice 25 associé, cela permet de limiter le déplacement longitudinal et vertical relatif entre le capot 17 et le segment terminal 9 du bras d'essuie-glace 5, et donc d'empêcher l'arrachement longitudinal ou vertical.

Le moyen de fixation 23 peut comporter de plus au moins deux protubérances 27 formées sur la partie supérieure 171 du capot 17. Plus précisément, les protubérances 27 sont formées sur la face interne de la paroi supérieure 171 formant la partie supérieure. On entend par « face interne », la face de la paroi supérieure 171 destinée à être agencée en regard du connecteur 15 à l'état assemblé du dispositif de connexion 7.

Ces protubérances 27 s'étendent vers l'intérieur du capot 17. L'axe transversal 13 du segment terminal 9 du bras d'essuie-glace 5 est configuré pour s'engager entre les deux protubérances 27 lors de l'assemblage avec le capot 17, comme cela est mieux visible sur la figure 2e. Ceci permet le centrage du segment terminal 9 du bras d'essuie-glace 5 et participe également au maintien en position de l'axe transversal 13.

En particulier, les protubérances 27 présentent chacune, sensiblement une forme en huit, simplifiée par la suite par forme en « 8 » en utilisant la référence numérique « 8 ». Autrement dit, les protubérances présentent une forme en « 8 » ou équivalente, c'est-à-dire se rapprochant de la forme en « 8 ». Bien entendu, cette forme en « 8 » n'est pas limitative et toute autre forme peut être envisagée.

Le bras d'essuie-glace 5 fixé au connecteur 15 et au capot 17 par l'axe transversal 13 est donc maintenu à l'arrachement suivant la direction verticale V par le capot 17 et notamment les reliefs 21 et le trou borgne 25, et éventuellement les protubérances 27, en l'empêchant de sortir par le bas en référence à la disposition des éléments sur les figures 1, 2a, 2c et 2f.

En outre, de façon à permettre le verrouillage ou le déverrouillage du capot 17 et du segment terminal 9 du bras d'essuie-glace 5, le capot 17 comporte au moins un élément flexible ou souple. Selon le mode de réalisation décrit, au moins la paroi latérale 175 du capot 17 portant le relief 21 est au moins partiellement flexible et est donc configurée pour se déformer de manière à permettre le verrouillage ou le déverrouillage. Avantageusement, les deux parois latérales 175 opposées sont au moins partiellement flexibles.

Le capot 17 forme alors un organe de préhension configuré pour se déformer de manière réversible, sous l'action d'un effort extérieur. Pour l'assemblage du capot 17 au bras d'essuie-glace 5, un utilisateur peut pousser le capot 17 selon la direction verticale V de sorte que les reliefs 21 et l'extrémité longitudinale 11 du bras d'essuie-glace 5 coulissent l'un par rapport à l'autre. Au moins la paroi latérale 175 portant les reliefs 21 se déforme du fait de la pente de la face oblique 211 de chaque relief 21. Pour désengager l'extrémité longitudinale 11 des rebords 213 des reliefs 21 formés sur le capot 17, voir figure 2f, il suffit d'écarter les deux parois latérales 175 du capot 17 pour déverrouiller l'ensemble. Aucun outil n'est nécessaire ni pour le verrouillage ni pour le déverrouillage.

Enfin, le capot 17 peut également comporter au moins une butée 29. Dans l'exemple illustré sur les figures 2b et 2g, trois butées 29 sont prévues. Ces butées 29 sont agencées sur la partie supérieure 171 du capot 17. En particulier, dans l'exemple décrit, les butées 29 sont agencées sur la face interne de la paroi supérieure 171 formant la partie supérieure.

Les butées 29 peuvent être réalisées d'une seule pièce avec le capot 17. Ces butées 29 servent à l'ajustement du montage du segment terminal 9 du bras d'essuie-glace 5 dans le capot 17, en se référant plus particulièrement à la figure 2b.

De plus, la hauteur de ces butées 29, c'est-à-dire suivant la direction verticale V, peut être adaptée et être retouchée facilement dans l'outil d'injection. Ceci évite de retoucher toute la face, ici la face interne de la paroi supérieure 171 du capot 17.

Les butées 29 sont agencées du côté du capot 17 destiné à recevoir l'extrémité longitudinale 11 du bras d'essuie-glace 5. Autrement dit, les butées 29 sont agencées du même côté que les reliefs 21, mais en étant décalées selon la direction verticale V. Les reliefs 21 sont agencés en bas tandis que les butées 29 sont agencées en haut.

Par ailleurs, selon ce premier mode de réalisation, les moyens de maintien 19 et de fixation 23 sont réalisés d'une seule pièce avec le capot 17 tout en étant prévus dans l'exemple illustré en des endroits distincts du capot 17. On facilite ainsi la réalisation de la pièce et cela améliore le montage et le démontage sur le connecteur 15.

### Deuxième mode de réalisation

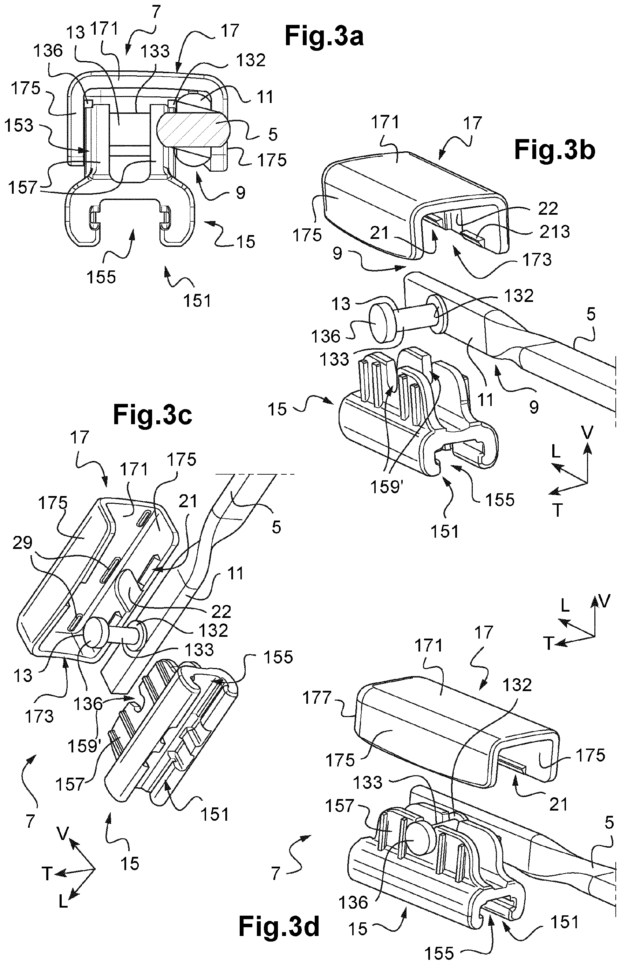

Un deuxième mode de réalisation est illustré sur les figures 3a à 3f. Seuls les éléments différents du premier mode de réalisation sont décrits ci-après.

Selon le deuxième mode de réalisation, le dispositif de connexion 7 (figures 3a à 3d) est configuré pour coopérer avec un bras d'essuie-glace 5 qui diffère du premier mode de réalisation par l'axe transversal 13.

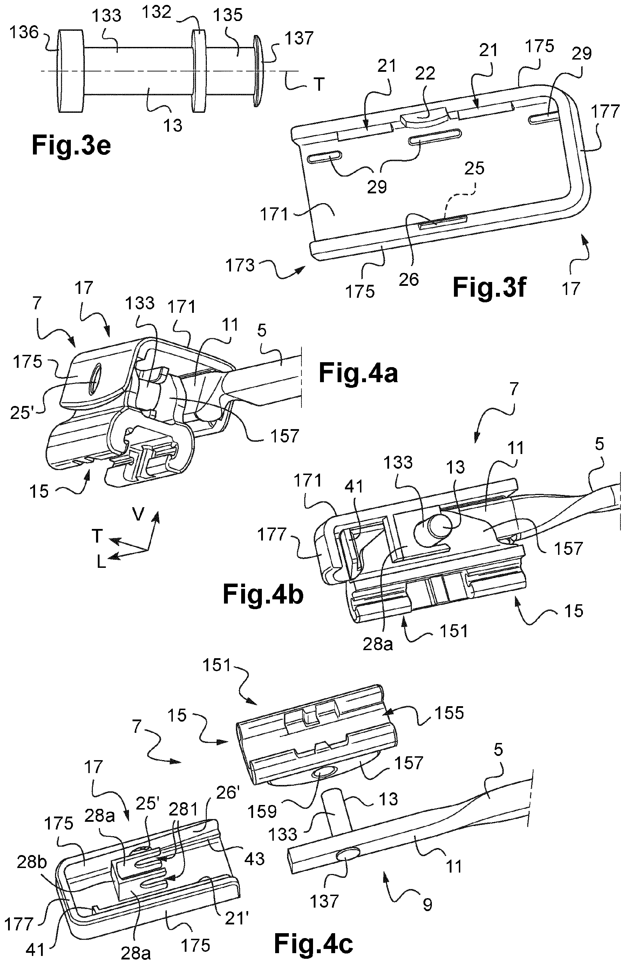

L'axe transversal 13, mieux visible sur la figure 3e, comporte un collet 132, par exemple formés par deux épaulements successifs.

De façon similaire au premier mode de réalisation, l'axe transversal 13 présente un premier tronçon 133 configuré pour être assemblé au connecteur 15 (non visible sur la figure 3e) et un deuxième tronçon 135 configuré pour être assemblé à l'extrémité longitudinale 11 du bras d'essuie-glace 5 (non visible sur la figure 3e).

De plus, selon l'exemple illustré, le collet 132 est situé entre le premier tronçon 133 et le deuxième tronçon 135. Les premier et deuxième tronçons 133 et 135 de l'axe transversal 13, de part et d'autre du collet 132, peuvent être de même diamètre.

Le collet 132 présente selon le deuxième mode de réalisation une surface d'appui sur l'extrémité longitudinale 11, du bras d'essuie-glace 5 à l'état assemblé de l'axe transversal 13 et de l'extrémité longitudinale 11, comme cela est visible sur les figures 3b à 3d .

Dans l'exemple de la figure 3e, l'axe transversal 13 comporte également, une embase 136 à l'extrémité libre du premier tronçon 133.

Le premier tronçon 133 est destiné à être monté dans le connecteur 15, de sorte que le collet 132 et l'embase 136 sont agencés en appui ou butée contre les faces externes des parois latérales 157 du connecteur 15 (voir figure 3d). On entend par « face externe » d'une paroi latérale 157, la face destinée à être agencée en regard de la face interne d'une paroi latérale 175 du capot 17 à l'état assemblé du dispositif de connexion 7.

De façon similaire au premier mode de réalisation, l'axe transversal 13 peut comporter en outre une extrémité 137 de diamètre supérieur au deuxième tronçon 135, par exemple formée par bouterollage. Le deuxième tronçon 135 est interposé entre le collet 132 et l'extrémité 137.

### Connecteur

En ce qui concerne le connecteur 15, selon ce deuxième mode de réalisation, c'est la deuxième partie 153 ou partie de liaison au bras d'essuie-glace 5 diffère du premier mode de réalisation.

En particulier, les moyens d'assemblage à l'axe transversal 13 des deux parois latérales 157 ne sont plus réalisés sous forme d'orifice 159, comme dans le premier mode de réalisation mais sous forme d'encoches 159' (voir figures 3b à 3d). Les encoches 159', et en particulier leur forme et leur dimension, sont adaptées pour le premier tronçon 133 de l'axe transversal 13, mais ne permettent pas le passage du collet 132 et de l'embase 136 à l'intérieur du connecteur 15, c'est-à-dire entre les faces internes des deux parois latérales 157.

### Capot

En ce qui concerne le capot 17 mieux visible sur la figure 3f, l'orifice 25 est configuré pour recevoir l'embase 136 de l'axe transversal 13 (non visible sur la figure 3f), à l'état assemblé du capot 17 au segment terminal 9 du bras d'essuie-glace 5.

Selon le deuxième mode de réalisation, le moyen de fixation 23 peut ne plus comporter de protubérances 27 formées sur la paroi supérieure 171 du capot 17, précédemment décrites en référence aux figures 2e, 2g du premier mode de réalisation.

Le reste de la description en référence au premier mode de réalisation illustré sur les figures 2a à 2h s'applique au deuxième mode de réalisation.

### Troisième mode de réalisation

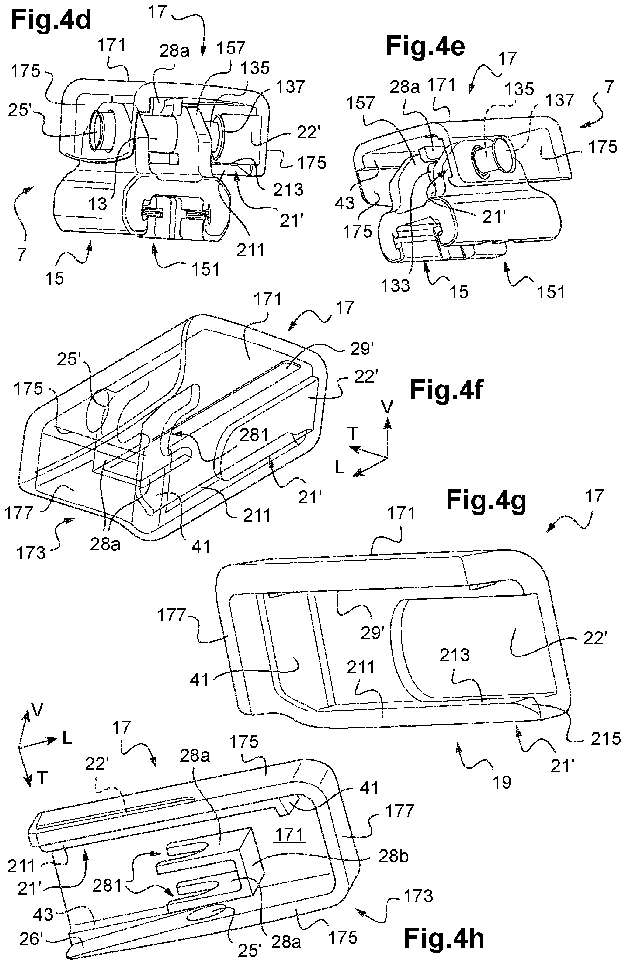

Un troisième mode de réalisation est illustré sur les figures 4a à 4h. Seuls les éléments différents du premier mode de réalisation sont décrits ci-après.

En particulier, selon ce troisième mode de réalisation, c'est le capot 17 qui diffère.

Le capot 17 est configuré pour un assemblage au connecteur 15 par translation longitudinale, de façon sensiblement parallèle à la direction longitudinale L. On entend par translation de façon sensiblement parallèle, une translation parallèlement à la direction longitudinale L ou selon une direction se rapprochant d'une direction parallèle à la direction longitudinale L.

À cet effet, le capot 17 peut comprendre un ou plusieurs moyens de guidage du connecteur 15 et/ou du segment terminal 9.

De plus, selon ce troisième mode de réalisation, la partie inférieure 173 du capot 17 comporte un moyen de maintien 19 réalisé d'une seule pièce avec le capot 17 et comportant un relief 21' (voir figures 4d, 4f, et 4h). Le même relief 21' s'étend sur plus de la moitié de la longueur du capot 17. Selon l'exemple illustré, le relief 21' s'étend sur quasiment toute la longueur du capot 17.

Bien entendu, en variante, on peut envisager plusieurs reliefs 21'.

De façon similaire au premier mode de réalisation, le relief 21' fait saille sur la portion inférieure ou basse de la paroi latérale 175, en s'étendant vers l'intérieur du capot 17.

Il s'agit en particulier dans cet exemple d'un relief 21' de guidage configuré pour guider le segment terminal 9 du bras d'essuie-glace 5 lors de l'assemblage du segment terminal 9 du bras d'essuie-glace 5 au capot 17. Le relief 21' fait donc office de moyen de guidage du segment terminal 9 du bras d'essuie-glace 5.

Le relief 21' peut présenter une forme similaire à celle des reliefs 21 du premier mode de réalisation.

De plus, le capot 17 peut comporter au moins une cloison 41 formant butée pour le segment terminal 9 du bras d'essuie-glace 5. Cette cloison 41, mieux visible sur la figure 4g, est agencée à l'extrémité du relief 21' en regard de la paroi d'extrémité 177.

Cette cloison 41 s'étend vers l'intérieur du capot 17, en particulier, selon un plan parallèle au plan T, V, de façon sensiblement parallèle à la paroi d'extrémité 177. Autrement dit, la cloison 41 s'étend parallèlement à la paroi d'extrémité 177 ou quasiment parallèlement à la paroi d'extrémité 177.

En particulier, la cloison 41 et le relief 21' peuvent être formés sans discontinuité de matière.

De façon similaire au premier mode de réalisation, le capot 17 comporte un guide de l'extrémité 137 de l'axe transversal 13 lors de l'introduction du segment terminal 9 du bras d'essuie-glace 5 dans le capot 17, par exemple réalisé sous la forme d'un évidement 22' (voir figures 4f et 4g) sur la paroi latérale 175 présentant le relief 21'.

L'évidement 22' présente par exemple une forme sensiblement en « U ». Autrement dit, l'évidement 22' présente une forme en « U » ou équivalente.

Contrairement au premier mode de réalisation, la forme du « U » est adaptée pour une translation longitudinale et non plus pour un coulissement vertical. Dans ce cas, les branches du « U » s'étendent longitudinalement suivant la direction longitudinale L. Autrement dit, les branches du « U » s'étendent de façon parallèle ou quasi-parallèle, au relief 21'. La base du « U » est orientée en direction de la paroi d'extrémité 177 du capot 17. L'évidement 22' est situé au-dessus du relief 21'.

En outre, en se référant de nouveau aux figures 4a, 4c, 4d et 4f, le moyen de fixation 23, comporte au moins un orifice 25' formé sur le capot 17.

De façon similaire au premier mode de réalisation, l'orifice 25' est prévu sur la paroi latérale 175 du capot 17 opposée à la paroi latérale 175 portant le relief 21'.

Cependant, contrairement au premier mode de réalisation, il s'agit d'un orifice 25' traversant et non plus d'un orifice 25 borgne. Comme cela est mieux visible sur la figure 4a ou 4d, l'axe transversal 13 est inséré dans l'orifice 25' lors de l'assemblage du segment terminal 9 du bras d'essuie-glace 5 au capot 17. En particulier, c'est l'extrémité libre du premier tronçon 133 de l'axe transversal 13 qui est reçue dans l'orifice 25'.

Selon ce troisième mode de réalisation, on peut également prévoir une pente 26' permettant de guider l'axe transversal 13 jusqu'à l'orifice 25', visible sur la figure 4h.

Cependant, contrairement au premier mode de réalisation la pente 26' est agencée de manière à débuter du bord latéral, et non plus du bord inférieur, de la paroi latérale 175 du capot 17 présentant l'orifice 25', pour se terminer en formant une portion du contour de l'orifice 25'.

Par ailleurs, la paroi latérale 175 présentant la pente 26' comporte au moins une nervure 43, définie par le rebord de la découpe pour réaliser la pente 26'. Cette nervure 43 assure avantageusement une fonction de moyen de guidage du connecteur 15 à l'assemblage du dispositif de connexion 7. Une paroi latérale 157 du connecteur 15, en particulier le haut de cette paroi latérale 157, peut coulisser sur la nervure 43.

Par ailleurs, en se référant aux figures 4c, 4f, 4h, le moyen de fixation 23 peut ne plus comporter de protubérances 27 formées sur la partie supérieure 171 du capot 17 précédemment décrites en référence aux figures 2e, 2g du premier mode de réalisation.

Au contraire, selon le troisième mode de réalisation illustré, le moyen de fixation 23 peut comporter au moins une paroi de fixation 28a. Dans l'exemple illustré, au moins deux parois de fixation 28a sont prévues. Ces parois de fixation 28a s'étendent depuis la partie supérieure 171 du capot 17 vers l'intérieur du capot 17, plus précisément depuis la face interne de la paroi supérieure 171 formant la partie supérieure du capot 17 selon les modes de réalisation décrits.

Les parois de fixation 28a s'étendent de façon sensiblement parallèle aux parois latérales 175 du capot 17. Autrement dit, les parois de fixation 28a s'étendent parallèlement ou quasi parallèlement aux parois latérales 175 du capot 17. Les parois de fixation 28a s'étendent dans cet exemple selon un plan parallèle au plan L, V.

L'une des parois de fixation 28a est agencée en regard de la paroi de latérale 175 du capot 17 sur laquelle l'orifice 25' est prévu. L'autre paroi de fixation 28a est agencée en regard de la paroi de latérale 175 du capot 17 présentant l'évidement 22'. Les deux parois de fixation 28a sont agencées en vis-à-vis l'une de l'autre.

De plus, les parois de fixation 28a présentent respectivement une encoche 281. À l'assemblage du capot 7 au connecteur 5 dans lequel l'axe transversal 13 est monté, cet axe transversal 13 s'engage dans les encoches 281.

Les deux encoches 281, l'orifice 25' et l'évidement 22' sont alignés selon la direction transversale T.

Par ailleurs, les encoches 281 sont de forme complémentaire à la forme de l'axe transversal 13, en particulier du premier tronçon 133. Les encoches 281 sont de forme sensiblement en « U » selon l'exemple illustré. C'est-à-dire, les encoches 281 sont de forme en « U » ou de forme équivalente ou similaire, se rapprochant du « U ».

Les parois de fixation 28a font office de parois d'accrochage ou de crochets pour la fixation de l'axe transversal 13.

On peut prévoir en outre une paroi supplémentaire 28b faisant la jonction entre les deux parois de fixation 28a. La paroi de jonction 28b s'étend en regard de la paroi d'extrémité 177. Cette paroi de jonction 28b s'étend dans cet exemple parallèlement, ou quasiment parallèlement, à la paroi d'extrémité 177.

L'ensemble des parois de fixation 28a et de jonction 28b présente dans l'exemple illustré une section sensiblement en « U », c'est-à-dire en « U » ou d'une forme se rapprochant au « U », comme cela est mieux visible sur la figure 4h.

Enfin, en se référant de nouveau à la figure 4f, le capot 17 peut comporter, sur la partie supérieure 171 du capot 17, une seule butée 29', plutôt que plusieurs butées 29 distinctes tel que décrit dans le premier mode de réalisation en référence aux figures 2b et 2g. Cette butée 29' permet également l'ajustement du montage du segment terminal 9 du bras d'essuie-glace 5 dans le capot 17.

Pour l'assemblage du capot 17 au bras d'essuie-glace 5, un utilisateur peut faire coulisser le capot 17 de sorte que l'extrémité longitudinale 11 du bras d'essuie-glace 5 coulisse par rapport au relief 21'. Au moins la paroi latérale 175 présentant l'orifice 25' se déforme du fait de la pente ascendante 26' qui mène jusqu'à l'orifice 25'.

Pour désengager l'extrémité l'axe transversal 13 de l'orifice 25', il suffit, de façon similaire au premier mode de réalisation, d'écarter les deux parois latérales 175 du capot 17 pour déverrouiller l'ensemble. Aucun outil n'est nécessaire ni pour le verrouillage ni pour le déverrouillage.

Le capot 17 et les moyens de maintien 19 du segment terminal 9 du bras d'essuie-glace 5, et avantageusement les moyens de fixation 23 de l'axe transversal 13 portés par le capot 17, sont réalisés d'une seule pièce. De plus, les moyens de maintien 19 du segment terminal 9 du bras d'essuie-glace 5, sont distincts des moyens de fixation 23 de l'axe transversal 13.

On réalise ainsi d'une seule pièce un capot 17 et les moyens nécessaires à l'assemblage de façon simple du dispositif de connexion 7 sur le bras d'essuie-glace 5. Selon les premier et deuxième modes de réalisation, le verrouillage peut se faire de façon simple par encliquetage lors de l'assemblage, sans nécessiter de manipulations supplémentaires compliquées.

De plus, les moyens de maintien 19 et/ou les moyens de fixation 23 sont avantageusement conformés de manière à empêcher un arrachement du capot 17 et/ou du connecteur 15 et/ou du bras d'essuie-glace 5, selon la direction verticale V.

En outre, les moyens de fixation 23 sont configurés pour bloquer longitudinalement le mouvement du connecteur 15 dans lequel l'axe transversal 13 est monté, par rapport au capot 17.

Enfin, les moyens de maintien 19 et/ou les moyens de fixation 23 permettent un verrouillage réversible du dispositif de connexion 7 sur le bras d'essuie-glace 5.

## Revendications

1. Capot (17) configuré pour être assemblé à un segment terminal (9) d'un bras d'essuie-glace (5) configuré pour être relié à un balai d'essuie-glace (3), ledit segment terminal (19) présentant une extrémité longitudinale (11) portant un axe transversal (13) configuré pour définir un axe de pivotement du balai d'essuie-glace (3), le capot (17) comportant :
- une partie supérieure (171) configurée pour recouvrir le segment terminal (9) du bras d'essuie-glace (5) à l'état assemblé du capot (17) audit segment terminal (9),
- une partie inférieure (173) opposée à la partie supérieure (171), et
- au moins un moyen de fixation (23) configuré pour coopérer avec l'axe transversal (13), de manière à fixer l'axe transversal (13) au capot (17),
**caractérisé en ce que** la partie inférieure (173) du capot (17) comporte au moins un moyen de maintien (19) réalisé d'une seule pièce avec le capot (17) et configuré pour coopérer avec le segment terminal (9) du bras d'essuie-glace (5) pour l'assemblage du capot (17) au segment terminal (9) du bras d'essuie-glace (5).

2. Capot (17) selon la revendication précédente, dans lequel ledit au moins un moyen de maintien (19) comporte au moins un relief (21 ; 21') formé sur la partie inférieure (173) du capot (17).

3. Capot (17) selon la revendication précédente, comportant deux parois latérales (175) opposées s'étendant à partir de la partie supérieure (171) du capot (17), et dans lequel ledit au moins un relief (21 ; 21') est formé sur une portion inférieure d'au moins une paroi latérale (175).

4. Capot (17) selon l'une quelconque des revendications précédentes, dans lequel ledit au moins un moyen de maintien (19) comporte au moins un relief d'encliquetage (21) configuré pour bloquer le retrait du segment terminal (9) du bras d'essuie-glace (5) à l'état assemblé du segment terminal (9) au capot (17).

5. Capot (17) selon l'une quelconque des revendications précédentes, dans lequel ledit au moins un moyen de maintien (19) comporte au moins un relief (21 ; 21') de guidage configuré pour guider le segment terminal (9) du bras d'essuie-glace (5) lors de l'assemblage du segment terminal (9) du bras d'essuie-glace (5) au capot (17).

6. Capot (17) selon l'une des revendications 2 à 5, présentant une forme longitudinale, dans lequel ledit au moins un relief (21 ; 21') s'étend selon la direction longitudinale (L) du capot (17).

7. Capot (17) selon la revendication 6, comprenant un même relief (21') s'étendant sur plus de la moitié de la longueur du capot (17).

8. Capot (17) selon l'une quelconque des revendications 2 à 6, comprenant au moins deux reliefs (21) distincts.

9. Capot (17) selon l'une quelconque des revendications 2 à 8, dans lequel ledit au moins un relief (21 ; 21') comporte :
- une face d'arrêt (213) formant un rebord contre lequel le segment terminal (9) du bras d'essuie-glace (5) est configuré pour venir en appui à l'état assemblé dudit segment terminal (9) au capot (17).

10. Capot (17) selon l'une quelconque des revendications précédentes, dans lequel ledit au moins un moyen de fixation (23) comporte au moins un orifice (25 ; 25') formé sur le capot (17).

11. Capot (17) selon la revendication 10, dans lequel l'orifice (25) est borgne.

12. Capot (17) selon la revendication 10, dans lequel l'orifice (25') est débouchant.

13. Capot (17) selon l'une quelconque des revendications précédentes, dans lequel ledit au moins un moyen de fixation (23) comporte au moins deux protubérances (27) formées sur la partie supérieure (171) du capot (17).

14. Capot (17) selon l'une quelconque des revendications précédentes, dans lequel ledit au moins un moyen de fixation (23) comprend au moins une paroi de fixation (28a), voire au moins deux parois, s'étendant depuis la partie supérieure (171) du capot (17) vers l'intérieur du capot (17), et présentant respectivement une encoche (281) dans laquelle l'axe transversal (13) porté par le bras d'essuie-glace (5) est configuré pour s'engager.

15. Dispositif de connexion (7) pour le montage d'un balai d'essuie-glace (3) sur un bras d'essuie-glace (5), le dispositif de connexion (7) comportant :
- un connecteur (15) configuré pour être relié au balai d'essuie-glace (3) d'une part et au bras d'essuie-glace (5) d'autre part, et
- un capot (17) configuré pour coopérer avec le connecteur (15) de manière à fixer le balai d'essuie-glace (3) au bras d'essuie-glace (5),
**caractérisé en ce que** le capot (17) est conforme à l'une quelconque des revendications précédentes.

16. Système d'essuyage de véhicule automobile comportant au moins un balai d'essuie-glace (3), **caractérisé en ce qu'**il comporte un dispositif de connexion (7) selon la revendication précédente.

## Patentansprüche

1. Abdeckung (17), die dazu konfiguriert ist, mit einem Endstück (9) eines Scheibenwischerarms (5) zusammengefügt zu werden, der dazu konfiguriert ist, mit einem Scheibenwischerblatt (3) verbunden zu werden, wobei das Endstück (19) ein Längsende (11) aufweist, das eine Querachse (13) trägt, die dazu konfiguriert ist, eine Schwenkachse des Scheibenwischerblatts (3) zu definieren, wobei die Abdeckung (17) Folgendes umfasst:
- einen oberen Abschnitt (171), der dazu konfiguriert ist, das Endstück (9) des Scheibenwischerarms (5) abzudecken, wenn die Abdeckung (17) mit dem Endstück (9) zusammengefügt ist,
- einen unteren Abschnitt (173), der dem oberen Abschnitt (171) gegenüberliegt, und
- mindestens ein Befestigungsmittel (23), das dazu konfiguriert ist, mit der Querachse (13) zusammenzuwirken, um die Querachse (13) an der Abdeckung (17) zu befestigen,
**dadurch gekennzeichnet, dass** der untere Abschnitt (173) der Abdeckung (17) mindestens ein Haltemittel (19) umfasst, das als ein Stück mit der Abdeckung (17) ausgebildet ist und dazu konfiguriert ist, mit dem Endstück (9) des Scheibenwischerarms (5) zusammenzuwirken, um die Abdeckung (17) mit dem Endstück (9) des Scheibenwischerarms (5) zusammenzufügen.

2. Abdeckung (17) nach dem vorhergehenden Anspruch, wobei das mindestens eine Haltemittel (19) mindestens ein Relief (21; 21') umfasst, das an dem unteren Abschnitt (173) der Abdeckung (17) gebildet ist.

3. Abdeckung (17) nach dem vorhergehenden Anspruch, die zwei gegenüberliegende Seitenwände (175) umfasst, die sich von dem oberen Abschnitt (171) der Abdeckung (17) erstrecken, und wobei das mindestens eine Relief (21; 21') auf einem unteren Abschnitt mindestens einer Seitenwand (175) gebildet ist.

4. Abdeckung (17) nach einem der vorhergehenden Ansprüche, wobei das mindestens eine Haltemittel (19) mindestens ein Einrastrelief (21) umfasst, das dazu konfiguriert ist, das Entfernen des Endstücks (9) von dem Scheibenwischerarm (5) zu blockieren, wenn das Endstück (9) mit der Abdeckung (17) zusammengefügt ist.

5. Abdeckung (17) nach einem der vorhergehenden Ansprüche, wobei das mindestens eine Haltemittel (19) mindestens ein Führungsrelief (21; 21') umfasst, das dazu konfiguriert ist, das Endstück (9) des Scheibenwischerarms (5) während des Zusammenfügens des Endstücks (9) des Scheibenwischerarms (5) mit der Abdeckung (17) zu führen.

6. Abdeckung (17) nach einem der Ansprüche 2 bis 5, die eine Längsform aufweist, wobei sich das mindestens eine Relief (21; 21') entlang der Längsrichtung (L) der Abdeckung (17) erstreckt.

7. Abdeckung (17) nach Anspruch 6, die ein gleiches Relief (21') beinhaltet, das sich über mehr als die Hälfte der Länge der Abdeckung (17) erstreckt.

8. Abdeckung (17) nach einem der Ansprüche 2 bis 6, die mindestens zwei verschiedene Reliefs (21) beinhaltet.

9. Abdeckung (17) nach einem der Ansprüche 2 bis 8, wobei das mindestens eine Relief (21; 21') Folgendes umfasst:
- eine Anschlagfläche (213), die eine Kante bildet, wobei das Endstück (9) des Scheibenwischerarms (5) dazu konfiguriert ist, an dieser anzuliegen, wenn das Endstück (9) mit der Abdeckung (17) zusammengefügt ist.

10. Abdeckung (17) nach einem der vorhergehenden Ansprüche, wobei das mindestens eine Befestigungsmittel (23) mindestens ein an der Abdeckung (17) gebildetes Loch (25; 25') umfasst.

11. Abdeckung (17) nach Anspruch 10, wobei das Loch (25) ein Sackloch ist.

12. Abdeckung (17) nach Anspruch 10, wobei das Loch (25') ein Durchgangsloch ist.

13. Abdeckung (17) nach einem der vorhergehenden Ansprüche, wobei das mindestens eine Befestigungsmittel (23) mindestens zwei Vorsprünge (27) umfasst, die an dem oberen Abschnitt (171) der Abdeckung (17) gebildet sind.

14. Abdeckung (17) nach einem der vorhergehenden Ansprüche, wobei das mindestens eine Befestigungsmittel (23) mindestens eine Befestigungswand (28a) oder sogar mindestens zwei Wände beinhaltet, die sich von dem oberen Abschnitt (171) der Abdeckung (17) ins Innere der Abdeckung (17) erstrecken und die jeweils eine Einkerbung (281) aufweisen, wobei die Querachse (13), die von dem Scheibenwischerarm (5) getragen wird, dazu konfiguriert ist, mit dieser in Eingriff zu kommen.

15. Verbindungsvorrichtung (7) für die Montage eines Scheibenwischerblatts (3) an einem Scheibenwischerarm (5), wobei die Verbindungsvorrichtung (7) Folgendes umfasst:
- ein Verbindungsstück (15), das dazu konfiguriert ist, mit dem Scheibenwischerblatt (3) einerseits und dem Scheibenwischerarm (5) andererseits verbunden zu werden, und
- eine Abdeckung (17), die dazu konfiguriert ist, mit dem Verbindungsstück (15) zusammenzuwirken, um das Scheibenwischerblatt (3) an dem Scheibenwischerarm (5) zu befestigen,
**dadurch gekennzeichnet, dass** die Abdeckung (17) einem der vorhergehenden Ansprüche entspricht.

16. Scheibenwischsystem eines Kraftfahrzeugs, das mindestens ein Scheibenwischerblatt (3) umfasst, **dadurch gekennzeichnet, dass** es eine Verbindungsvorrichtung (7) nach dem vorhergehenden Anspruch umfasst.

## Claims

1. Cap (17) which is configured to be assembled with a terminal segment (9) of a windscreen wiper arm (5) which is configured to be connected to a windscreen wiper (3), said terminal segment (19) having a longitudinal end (11) bearing a transverse pin (13) which is configured to define a pivot axis of the windscreen wiper (3), the cap (17) comprising :
- an upper part (171) which is configured to cover the terminal segment (9) of the windscreen wiper arm (5) in the assembled state of the cap (17) on said terminal segment (9),
- a lower part (173) opposing the upper part (171), and
- at least one fixing means (23) which is configured to cooperate with the transverse pin (13), so as to fix the transverse pin (13) to the cap (17),
**characterized in that** the lower part (173) of the cap (17) comprises at least one support means (19) which is produced integrally with the cap (17) and which is configured to cooperate with the terminal segment (9) of the windscreen wiper arm (5) for the assembly of the cap (17) with the terminal segment (9) of the windscreen wiper arm (5).

2. Cap (17) according to the preceding claim, wherein said at least one support means (19) comprises at least one relief (21; 21') formed on the lower part (173) of the cap (17).

3. Cap (17) according to the preceding claim, comprising two opposing lateral walls (175) extending from the upper part (171) of the cap (17), and wherein at least one relief (21; 21') is formed on a lower portion of at least one lateral wall (175).

4. Cap (17) according to any one of the preceding claims, wherein said at least one support means (19) comprises at least one clipping relief (21) which is configured to block the retraction of the terminal segment (9) of the windscreen wiper arm (5) in the assembled state of the terminal segment (9) on the cap (17).

5. Cap (17) according to any one of the preceding claims, wherein said at least one support means (19) comprises at least one guide relief (21; 21') which is configured to guide the terminal segment (9) of the windscreen wiper arm (5) during the assembly of the terminal segment (9) of the windscreen wiper arm (5) with the cap (17).

6. Cap (17) according to one of Claims 2 to 5, having a longitudinal shape, wherein said at least one relief (21; 21') extends in the longitudinal direction (L) of the cap (17).

7. Cap (17) according to Claim 6, comprising the same relief (21') extending over more than half of the length of the cap (17).

8. Cap (17) according to any one of Claims 2 to 6, comprising at least two separate reliefs (21).

9. Cap (17) according to any one of Claims 2 to 8, wherein said at least one relief (21; 21') comprises:
- a stop face (213) forming an edge, the terminal segment (9) of the windscreen wiper arm (5) being configured to bear thereagainst in the assembled state of said terminal segment (9) on the cap (17).

10. Cap (17) according to any one of the preceding claims, wherein said at least one fixing means (23) comprises at least one orifice (25; 25') formed on the cap (17).

11. Cap (17) according to Claim 10, wherein the orifice (25) is blind.

12. Cap (17) according to Claim 10, wherein the orifice (25') is a through-orifice.

13. Cap (17) according to any one of the preceding claims, wherein said at least one fixing means (23) comprises at least two protuberances (27) formed on the upper part (171) of the cap (17).

14. Cap (17) according to any one of the preceding claim, wherein said at least one fixing means (23) comprises at least one fixing wall (28a), or even at least two walls, extending from the upper part (171) of the cap (17) to the interior of the cap (17) and respectively having a notch (281), the transverse pin (13) borne by the windscreen wiper arm (5) being configured to be engaged therein.

15. Connecting device (7) for the mounting of a windscreen wiper (3) on a windscreen wiper arm (5), the connecting device (7) comprising :
- a connector (15) which is configured to be connected to the windscreen wiper (3), on the one hand, and to the windscreen wiper arm (5), on the other hand, and
- a cap (17) which is configured to cooperate with the connector (15) so as to fix the windscreen wiper (3) to the windscreen wiper arm (5),
**characterized in that** the cap (17) is according to any one of the preceding claims.

16. Windscreen wiping system for a motor vehicle comprising at least one windscreen wiper (3), **characterized in that** it comprises a connecting device (7) according to the preceding claim.
